# DEMANDE DE BREVET EUROPEEN

(11) **EP 0 725 290 A1**
(43) Date de publication de la demande: **07.08.1996**
(21) Numéro de dépôt: 96400216.6
(22) Date de dépôt: 31.01.1996
(51) Int. Cl.: G02B 6/38, C03B 23/047

(54) **Multiférule de connexion de fibres, connecteur en faisant application et procédé de fabrication de cette multiférule**

(30) Priorité: 03.02.1995 FR 9501275
(71) Demandeur: ALCATEL CABLE INTERFACE, F-08330 Vrigne aux Bois (FR)
(72) Inventeur: Boniort, Jean-Yves, F-91470 Limours (FR); Hakoun, Roland, F-95330 Domont (FR); Brehm, Claude, F-92120 Montrouge (FR); Bourhis, Jean-Francois, F-95150 Taverny (FR); Tardy, Andre, F-91520 Egly (FR); Joly, Bertrand, F-92310 Sevres (FR)
(74) Mandataire: Buffiere, Michelle

(57) **Abrégé**

La multiférule de connexion de fibres optiques comporte une série de canaux capillaires internes ayant des dimensions transversales définies pour laisser un jeu substantiel aux fibres, tout au moins dans leurs parties terminales débouchant sur les deux faces frontales de la multiférule. Elle est caractérisée en ce qu'elle comporte en outre une striction médiane (4) dans laquelle les parties médianes correspondantes des canaux (3) ont des dimensions transversales réduites ne laissant qu'un jeu minimal aux fibres, pour leur mise en contact et leur raccordement direct à ce niveau.

Application : Connecteur de fibres optiques.

## Description

La présente invention porte sur une multiférule de connexion de fibres optiques, en particulier de deux câbles plats en forme de ruban comportant chacun une pluralité de fibres optiques, sur un connecteur résultant et sur un procédé de fabrication de cette multiférule.

Le document FR-A-2 669 119 décrit un procédé de fabrication d'une multiférule en matériau vitreux, qui est du type comportant une série de canaux capillaires internes parallèles.

Une telle multiférule est constituée par un tronçon prélevé sur une pièce de grande longueur, qui est obtenue par étirage dans une installation de fibrage d'une ébauche primaire homothétiquement correspondante.

Le document FR-A-2 674 341 décrit un procédé de raccordement de deux câbles à fibres optiques par épissurage, utilisant une multiférule en verre du type précité. Selon ce procédé, on enfile les extrémités dénudées des couples de fibres dans les canaux, sensiblement jusqu'à la partie médiane de la multiférule, et on les immobilise dans ces canaux. On sectionne alors la multiférule, transversalement aux fibres immobilisées, pour obtenir deux tronçons extrêmes qui sont solidaires des deux câbles respectivement et un tronçon médian qui est éliminé. On réalise ensuite l'épissure en raccordant les deux tronçons extrêmes. Avantageusement, on utilise un gel servant à l'adaptation des indices de réfraction au niveau des interfaces d'épissurage.

Pour faciliter le sectionnement de la multiférule, on usine initialement deux rainures transversales aux canaux de part et d'autre de la partie médiane, le fond des rainures débouchant dans ces canaux.

L'avance des fibres de chaque couple dans le canal les recevant est d'autant plus aisée que le jeu prévu pour ces fibres dans le canal est relativement important. Un tel jeu important ne permet par contre pas l'obtention d'un alignement optique précis des deux fibres immobilisées dans leur canal. Il peut être compensé en tirant profit de l'existence des deux rainures transversales, prévues pour le sectionnement de la multiférule, qui permettent l'accès aux deux fibres insérées dans le canal et permettent de venir presser ces deux fibres au fond du canal avant leur immobilisation, pour qu'elles soient alignées optiquement.

ces différentes opérations pour le raccordement des deux câbles à fibres optiques sont longues et délicates et ne conduisent pas toujours à une connexion optique satisfaisante.

La présente invention a pour but de réaliser une multiférule évitant les opérations précitées et permettant l'obtention d'une connexion optique satisfaisante de câbles à fibres optiques.

Elle a pour objet une multiférule de connexion de fibres optiques, de forme allongée, comportant une série longitudinale de canaux capillaires internes, parallèles et sensiblement coplanaires, et dans laquelle chaque canal a des parties terminales ouvertes sur deux faces opposées dites frontales de la multiférule, est destiné à recevoir par l'une et l'autre de ses extrémités deux desdites fibres à raccorder et présente tout au moins dans ses parties terminales des dimensions transversales définies pour laisser un jeu substantiel aux fibres, caractérisée en ce qu'elle comporte en outre une striction médiane dans laquelle les parties médianes correspondantes desdits canaux ont des dimensions transversales réduites ne laissant qu'un jeu minimal aux fibres, pour la mise en contact et le raccordement direct l'une à l'autre à ce niveau des deux fibres reçues dans chaque canal.

De préférence, en outre :
- la striction est progressive en s'étendant symétriquement entre les parties d'extrémité de la multiférule et a une longueur au moins égale à 10 mm;
- les canaux capillaires sont de section triangulaire, sont ouverts en long pour communiquer les uns avec les autres et sont définis par une série de rainures en Vé et une rainure unique rectangulaire en vis-à-vis de la série de rainures en Vé.

L'invention a également pour objet un connecteur faisant application de cette multiférule et comportant un couple de fibres insérées dans chaque canal, caractérisé en ce que lesdites fibres de chaque couple sont disposées en contact bout à bout dans ladite partie médiane du canal les recevant et en ce qu'il comporte en outre un moyen d'immobilisation desdites fibres.

Avantageusement ce connecteur comporte en outre un gel servant à l'adaptation des indices de réfraction des fibres de chaque couple, à leur interface de contact.

L'invention a aussi pour objet un procédé de fabrication de cette multiférule, consistant à étirer une préforme dite primaire dans une installation de fibrage en une pièce de grande longueur, de dimensions transversales et de géométrie uniformes sur toute sa longueur et identiques à celles desdites parties d'extrémité de ladite multiférule, ladite pièce et ladite préforme primaire étant homothétiques l'une de l'autre, et à sectionner un tronçon de longueur définie de ladite pièce pour l'obtention d'une multiférule initiale, caractérisé en ce qu'il consiste en outre à chauffer une zone médiane de ladite multiférule initiale, sur toute sa périphérie, et à étirer ladite multiférule initiale tout en contrôlant son allongement pour l'obtention de ladite striction.

De préférence, le procédé consiste à définir les dimensions transversales des canaux de ladite multiférule initiale pour l'obtention dudit jeu substantiel d'une valeur au moins égale à 10 microns, à chauffer ladite zone médiane de la multiférule initiale sur une longueur égale sensiblement à 20 millimètres et à étirer ladite multiférule initiale pour son allongement de 1,6 mm sensiblement.

Les caractéristiques et les avantages de la présente invention ressortiront de la description faite ci-après d'un mode préféré de réalisation donné à titre d'exemple et illustré dans les dessins ci-annexés. Dans ces dessins :
- la figure 1 est une vue en élévation d'une multiférule de connexion de fibres optiques, selon l'invention,
- les figures 2 et 3 sont deux vues en coupe transversale à échelle agrandie selon les lignes II-II et III-III de la figure 1,
- la figure 4 est une vue en coupe longitudinale selon la ligne IV-IV de la figure 1, illustrant le raccordement par épissurage d'un couple de fibres,
- la figure 5 est une vue en élévation illustrant le procédé de fabrication de la multiférule de la figure 1.

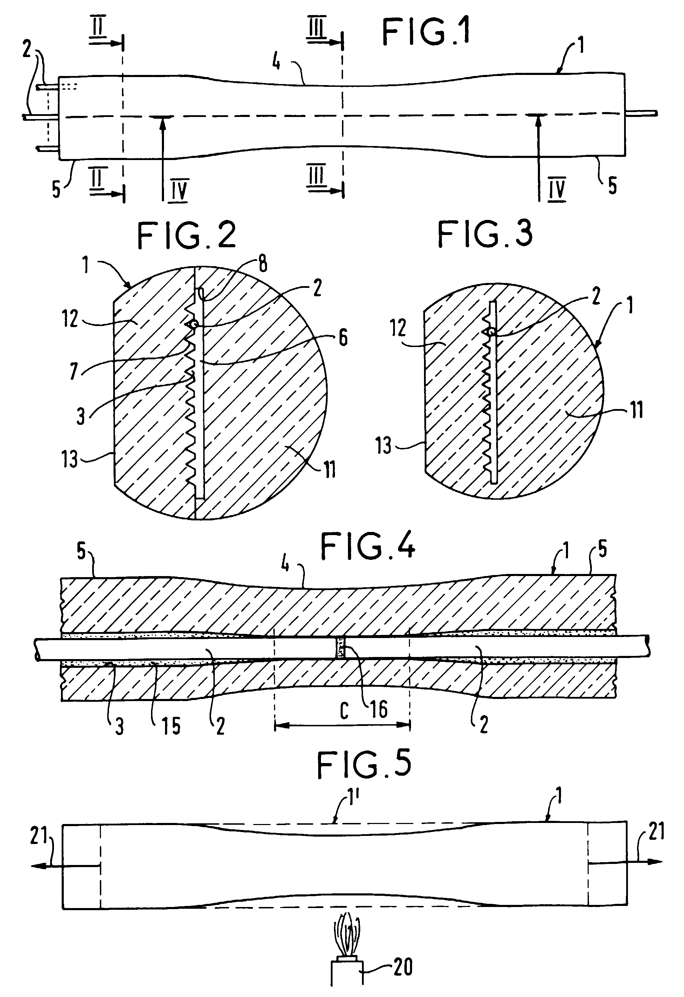

Les figures 1 à 4 montrent une multiférule 1 en verre ou en matériau vitreux dans laquelle sont raccordées des fibres optiques 2. Ces fibres optiques sont celles de deux câbles non représentés, qui sont en particulier deux câbles plats sous forme de ruban, comportant une pluralité de fibres optiques monomodes.

La multiférule comporte une série de canaux capillaires internes 3, parallèles et sensiblement coplanaires, une striction 4 s'étendant sur sa partie médiane et affectant les canaux internes à ce niveau, et deux parties d'extrémité 5, situées de part et d'autre de la striction de la partie médiane.

Les canaux débouchent sur les faces frontales opposées de la multiférule et reçoivent chacun un couple de fibres 2 à raccorder.

Dans les deux parties d'extrémité 5 de la multiférule, les canaux sont prévus pour laisser un jeu substantiel, qui est relativement important, aux fibres dénudées, en vue de l'avance aisée de ces fibres à ce niveau. Dans la striction 4 ou partie médiane, ces canaux sont de section droite se réduisant de manière progressive et symétrique depuis les parties d'extrémité 5, pour permettre d'obtenir un alignement optique précis des axes des fibres amenées bout à bout dans la zone centrale dite de connexion c de la partie médiane de la multiférule. Cet alignement optique précis est ainsi réalisé avec une tolérance de l'ordre et même inférieure au micromètre.

Ces canaux 3 sont ouverts longitudinalement pour communiquer les uns avec les autres par des ouvertures longitudinales 6. Ils sont en outre de préférence définis d'une part par une série de rainures en Vé 7 situées côte-à-côte et d'autre part par une rainure unique rectangulaire 8, large et peu profonde, située en vis-à-vis de la série de rainures 7. Cette rainure rectangulaire ou plus précisément le fond de celle-ci est au droit des ouvertures des rainures en Vé 7 et constitue une voute plane désignée ci-après sous cette même référence 8. Elle est de largeur légèrement supérieure à la largeur de la série de rainures 7, pour s'étendre d'un côté et de l'autre de cette série de rainures.

Les canaux 3 ainsi définis résultent d'usinage de deux pièces initiales qui sont assemblées l'une à l'autre et correspondent à deux moitiés 11 et 12 de la multiférule 1. Dans la multiférule 1, ces deux moitiés 11 et 12 sont indissociables l'une de l'autre et assimilables à un tout.

Dans l'exemple de réalisation illustré on voit, en se référant aux figures 2 et 3, que la multiférule comporte 12 canaux capillaires 3 pour permettre le raccordement de deux câbles ayant 12 fibres optiques ou moins, ce nombre de canaux peut bien entendu être différent.

Ces canaux 3 définissent dans les parties d'extrémité l'espacement entre les fibres optiques gainées qu'ils reçoivent. Ils sont prévus au pas des fibres gainées de chaque câble en forme de ruban.

En outre, ces mêmes figures 2 et 3 montrent que la multiférule est de section droite semi-circulaire, qui est différente de l'une de ces deux figures à l'autre selon que l'on se situe au niveau de l'une des parties d'extrémité ou de la striction, et qui présente un méplat 13 sur la moitié 12 dite inférieure.

Ce méplat 13 est parallèle à la série de rainures en Vé 7 prévue sur cette moitié inférieure 12. Il constitue une assise de la multiférule, pour un positionnement stable de celle-ci sur un support plan de travail. Bien entendu la forme extérieure de la multiférule peut être différente.

Bien que non représenté dans la figure 1, on indique en outre que la multiférule 1 présente avantageusement des faces frontales épaulées pour définir sur chacune d'elles une surface d'appui et d'immobilisation des fibres gainées. Une telle surface d'appui des fibres gainées est décalée par rapport au plan de maintien des fibres dénudées dans les rainures en Vé 7 d'une distance sensiblement égale à l'épaisseur de gaine des fibres.

Le raccordement par épissurage des couples de fibres est réalisé directement dans la multiférule 1, ainsi que montré dans la figure 4. A cet effet, les fibres de chaque couple sont mises bout à bout dans la zone centrale de connexion c. Elles sont ainsi immobilisées à l'aide d'un moyen convenable 15, tel que de la colle, qui bloque les fibres gainées pressées contre les surfaces d'appui des deux faces frontales et bloque les fibres dénudées dans chaque canal, tout au moins dans les parties terminales de chaque canal.

Lorsque l'immobilisation est réalisée à l'aide d'une colle, celle-ci est de préférence une colle de faible viscosité polymérisable aux rayons ultraviolets. Elle est déposée sur les faces frontales épaulées de la multiférule, se répand dans les canaux et est polymérisée sous l'action d'un rayonnmement ultraviolet.

Avantageusement, on prévoit aussi un gel 16 servant à l'adaptation des indices de réfraction au niveau des interfaces de raccordement des fibres. Ce gel peut être déposé sur l'extrémité frontale de l'une des fibres ou des deux fibres de chaque couple, avant leur insertion dans le canal. En variante, il peut être déposé sur l'une des extrémités des canaux dans lesquels les fibres sont déjà en place mais non immobilisées et être soufflé depuis cette extrémité ou être aspiré depuis l'autre extrémité des canaux avant l'immobilisation des fibres. De petits déplacements de l'un des deux jeux de fibres pour écarter les jeux l'un de l'autre et les remettre en contact dans la zone de connexion favorisent la pénétration du gel dans l'interface de contact des fibres.

La section triangulaire de chaque canal définit le maintien avec un jeu important 6 des deux fibres d'un même couple dans chaque canal, en trois points équidistants de leur périphérie, dans les deux portions terminales de ce canal, respectivement. Par contre elle définit un contact pratiquement sans jeu de ces mêmes deux fibres dans le canal, au niveau de la zone de connexion. Les ouvertures longitudinales 6 du canal permettent l'avance dans le canal de la deuxième fibre, après l'insertion en place de la première fibre jusqu'à la zone de connexion, en constituant les évents nécessaires à cette avance et à la mise en contact de la deuxième fibre avec la première dans la zone de connexion.

On précise que le jeu laissé à chaque fibre dénudée dans la portion terminale de canal 3 est au moins de 10 microns tandis qu'il devient de l'ordre ou inférieur au micron dans la partie centrale de la zone de connexion.

On précise aussi que dans les parties d'extrémité 5 les rainures en Vé 7 ont en particulier un angle au sommet sensiblement de 70° et un pas entre elles de 250 microns, pour les fibres ayant un diamètre de 250 microns quand elles sont gainées et un diamètre de 125 microns quand elles sont dénudées.

La figure 5 illustre un procédé de fabrication de la multiférule 1 ou plus précisément la seule étape finale de ce procédé, les étapes préliminaires étant en tant que telles connues et de ce fait simplement indiquées de manière sommaire.

Ces étapes préliminaires consistent à réaliser une multiférule initiale l', qui est illustrée en pointillés et est non finale, à partir d'une ébauche ou préforme primaire, par étirage de cette préforme dans une installation de fibrage pour l'obtention d'une pièce de grande longueur et par sectionnement d'un tronçon de courte longueur définie sur cette pièce. Cette préforme est cylindrique ou semi-cylindrique et résulte elle-même d'assemblage de ses deux moitiés initiales qui sont préalablement usinées pour l'obtention des canaux capillaires internes et de l'éventuel méplat de la multiférule 1'. Une telle préforme de diamètre par exemple de 40 mm est ainsi étirée en une pièce de l'ordre de 4 mm de diamètre, qui à son tour est sectionnée pour l'obtention de la multiférule initiale 1'. La longueur minimale de la multiférule initiale 1' est de préférence de l'ordre de 30 mm.

Selon l'invention, l'étape finale du procédé de fabrication de la multiférule 1 consiste à chauffer localement la multiférule initiale 1' et à l'étirer à nouveau pour procéder de manière contrôlée à la striction 4. Cette striction affecte une longueur d'au moins 10 mm de la multiférule 1.

La zone soumise au chauffage de la multiférule initiale 1' couvre une longueur de 20 mm environ.

Ce chauffage est réalisé par la flamme d'un chalumeau 20 sur la périphérie de la multiférule initiale, mais pas sur ses parties terminales pour éviter les déformations des parties d'extrémité.

Le paramètre de contrôle au cours de cette étape finale est l'allongement longitidinal de la multiférule 1' au cours de son étirage symbolisé par les flèches 21 opposées. Cet allongement est mesuré avec précision à l'aide d'un extensomètre non représenté. Pour un jeu de 10 microns prévu pour les fibres dénudées dans les canaux, calibrés à mieux que 100 microns, de la multiférule initiale, et pour une zone chauffée de 20 mm de longueur, l'allongement par étirage de la multiférule initiale est de l'ordre de 1,6 mm. Pour cet allongement on obtient une réduction des canaux calibrés de l'ordre de 8 %, ce qui permet d'obtenir dans une précision de positionnement des fibres inférieure au micron.

En regard de la multiférule 1 ainsi obtenue, on note que la striction 4 réalisée implique une réduction de la géomètrie de la zone concernée, dans toutes les directions. Ceci signifie que les fibres dans les canaux extrêmes vont subir une très légère courbure dans la zone centrale dite de connexion et que les faces terminales de ces fibres ne vont pas être très rigoureusement dans le même plan. C'est en conséquence que la striction est de longueur relativement importante et de préférence supérieure à 10 mm sur la multiférule. Une telle longueur facilite l'étirage, permet un contrôle de précision de l'allongement obtenu et permet de minimiser une telle courbure des fibres les plus éloignées de l'axe de la multiférule et donc de minimiser la dispersion résultante.

La multiférule 1 pourvue d'une telle striction permet de raccorder directement les fibres optiques dans ses canaux capillaires, ceci sans aucune mesure de compensation du jeu prévu minimal dans la seule zone de connexion et sans autres opérations préalables ou ultérieures, qui étaient nécessaires auparavant avec les multiférules sans striction.

## Revendications

1. Multiférule de connexion de fibres optiques, de forme allongée, comportant une série longitudinale de canaux capillaires internes, parallèles et sensiblement coplanaires, et dans laquelle chaque canal a des parties terminales ouvertes sur deux faces opposées dites frontales de la multiférule, est destiné à recevoir par l'une et l'autre de ses extrémités deux desdites fibres à raccorder et présente tout au moins dans ses parties terminales des dimensions transversales définies pour laisser un jeu substantiel aux fibres, caractérisée en ce qu'elle comporte en outre une striction médiane (4) dans laquelle les parties médianes correspondantes desdits canaux ont des dimensions transversales réduites ne laissant qu'un jeu minimal aux fibres, pour la mise en contact et le raccordement direct l'une à l'autre à ce niveau des deux fibres reçues dans chaque canal (3).

2. Multiférule selon la revendication 1, caractérisée en ce que ladite striction (4) est progressive et s'étend symétriquement entre les parties opposées d'extrémité (5) de ladite multiférule (1).

3. Multiférule selon la revendication 2, caractérisée en ce que ladite striction (4) a une longueur au moins égale à 10 mm.

4. Multiférule selon l'une des revendications 1 à 3, caractérisée en ce que lesdits canaux capillaires (3) ont une section droite triangulaire et présentent deux ouvertures longitudinales (6) de communication les uns aux autres.

5. Multiférule selon la revendication 4, caractérisée en ce que ladite série de canaux (3) est constituée d'une part par une série de rainures en Vé (7) situées côte-à-côte et d'autre part par une rainure unique rectangulaire (8) situé en vis-à-vis de ladite série de rainures en Vé, s'étendant sur au moins la largeur de la série de rainures en Vé et formant voûte plane au droit de celles-ci.

6. Multiférule selon la revendication 5, caractérisée en ce que lesdites rainures en Vé (7) ont un angle au sommet de l'ordre de 70°.

7. Connecteur faisant application de la multiférule selon l'une des revendications 1 à 6 et comportant un couple de fibres insérées dans chaque canal, caractérisé en ce que lesdites fibres de chaque couple sont disposées en contact bout à bout dans ladite partie médiane du canal les recevant et en ce qu'il comporte en outre un moyen d'immobilisation (15) des fibres (2).

8. Connecteur selon la revendication 7, caractérisé en ce qu'il comporte en outre un gel (16) servant à l'adaptation des indices de réfraction des fibres de chaque couple, à leur interface de contact.

9. Procédé de fabrication de la multiférule selon l'une des revendications 1 à 6, consistant à étirer une préforme dite primaire dans une installation de fibrage en une pièce de grande longueur, de dimensions transversales et de géométrie uniformes sur toute sa longueur et identiques à celles des parties d'extrémité de ladite multiférule, ladite pièce et ladite préforme primaire étant homothétiques l'une de l'autre, et à sectionner un tronçon de longueur définie de ladite pièce pour l'obtention d'une multiférule initiale, caractérisé en ce qu'il consiste en outre à chauffer une zone médiane de ladite multiférule initiale (1'), sur toute sa périphérie, et à étirer ladite multiférule initiale tout en contrôlant son allongement pour l'obtention de ladite striction.

10. Procédé selon la revendication 9, caractérisé en ce qu'il consiste à définir les dimensions transversales des canaux de ladite multiférule initiale pour l'obtention dudit jeu substantiel ayant une valeur au moins égale à 10 microns, à chauffer ladite zone médiane de la multiférule initiale sur une longueur égale sensiblement à 20 millimètres et à étirer ladite multiférule initiale pour son allongement de 1,6 mm sensiblement.
